# EUROPEAN PATENT APPLICATION

(11) **EP 1 250 850 A2**
(43) Date of publication of application: **23.10.2002**
(21) Application number: 02008148.5
(22) Date of filing: 12.04.2002
(51) Int. Cl.: A23K 1/16, A23K 1/18

(54) **Cultured fish feed with added carotenoids and polyphenols**

(30) Priority: 20.04.2001 JP 2001122614
(71) Applicant: Sakiura, Toshiyuki, Yokohama-shi, Kanagawa 233-0006 (JP)
(72) Inventor: Sakiura, Toshiyuki, Yokohama-shi, Kanagawa 233-0006 (JP)
(74) Representative: HOFFMANN - EITLE

(57) **Abstract**

A cultured fish feed is provided which enables cultivating of cultured fish where the fishes are cultivated in good conditions, and the adrenal cortex is activated, being matters which cannot be achieved using conventional cultured fish feed. 30 to 300 ppm of polyphenol is added to a cultured fish feed mixed with 10 to 200 ppm of carotenoid. Moreover, the weight ratio of an added amount of polyphenol to the carotenoid mixture amount prescribed as carotenoid : polyphenol is 10: 300 to 200 ppm: 30 ppm.

## Description

### BACKGROUND OF THE INVENTION

### Field of the Invention

The present invention relates to a cultured fish feed where proanthocyanidin is added to a carotenoid mixture feed.

### Description of the Related Art

It is well known that the quality of cultured fish does not attain the quality of natural fish. Since cultured fish are in general cultivated in overcrowded conditions, they lapse into insufficient exercise, and as a result there is a tendency for fat buildup to increase. In addition, since the cultured fish must be grown over a short period and then delivered, high fat, high protein feed is given. Therefore, the problem arises in that the vitality of the cultured fish is lowered, and their resistance to disease is lowered.

Heretofore, various attempts have been made to make the cultured fish close to natural fish, and in order to improve the condition of the cultured fish, various improvement feeds and improvement cultivating methods have been proposed. For example, in the case of cultivating fishes and the like, in order to improve individual yield without the use of drugs such as antibiotics and thus eliminate concerns about residual drugs, there has been proposed a cultured fish feed which contains a tea constituent (refer for example to Japanese Patent Laid-Open Publication No. HEI 5-308908). Furthermore, in order to improve the cultured fish meat quality, there has been proposed a cultured fish feed which contains a polyphenol base compound having a catechin structure (refer for example to Japanese Patent Laid-Open Publication No. HEI 8-336359). Moreover, there has been proposed a method of administering anthocyanidin to fishes for cultivating fish, with the purpose of improving defense against fish oxidation stress and achieving improvement in fish health maintenance (refer for example to Japanese Patent Laid-Open Publication No. HEI 10-225266).

However, by adopting the conventional improved feed or improved cultivating methods, while a certain affect is obtained, there is a problem in that when evaluated objectively and by a quantitative index, an affect approaching the level of natural fish is not obtained.

### SUMMARY OF THE INVENTTOM

Therefore, the present invention has been conceived in order to solve these problems with the conventional technology. An object of the present invention is to provide a cultured fish feed which solves the problems of the aforementioned conventional cultured fish feed, and enables cultivating of cultured fish where the fishes are cultivated in good conditions, and the adrenal cortex is activated, being matters which cannot be achieved using conventional cultured fish feed.

The present invention provides a cultured fish feed where 30 to 300 ppm of polyphenol is added to a cultured fish feed mixed with 10 to 200 ppm of carotenoid.

Moreover, there is provided a cultured fish feed wherein a weight ratio of an added amount of polyphenol to a carotenoid mixture amount prescribed as carotenoid: polyphenol is 10: 300 to 200 ppm: 30 ppm.

### DESCRIPTION OF THE PREFERRED EMBODIMENTS

The target cultured fish of the present invention are fishes in the broad sense which are generally cultivated such as fresh water fish, for example rainbow trout and Japanese sakura masu(cherry salmon), and salt water fish, for example sea bream, salmon, tuna, yellow-tail, lobster and so on.

The cultured fish feed of the present invention comprises a substrate and improvement additives. The substrate further comprises a substrate raw material and substrate additives.

The substrate raw material is mainly composed of an animal feed for fish body development, for example fish powder, grain, or bran. All of the substrate raw material in general use may be used without any particular limitation requirements, and may be optionally selected according to the target fish. For the substrate additives the main constituents are various vitamin compounds for supporting fish body development, essential minerals, and carotenoid as a coloring material.

The improvement additives are polyphenol, and in particular proanthocyanidin.

The carotenoid contains known carotenoids such as astaxanthin, canthaxantin, and others. The carotenoid is mixed at from 10 to 200 ppm. The mixed amount is less for small fish and more for adult fish. If less than 10 ppm, the affect is not seen, while if more than 200 ppm, stress occurs due to overdose, and fatty liver and skeletal disorders occur due to lipo-solubility. The mixed amount of carotenoid is preferably from 20 to 150 ppm, and more preferably from 30 to 100 ppm.

Furthermore, proanthocyanidin is a condensed-type tannin existing in various plant bodies, that is to say a compound group where a flavan-3-ol, or a flavan-3, 4-diol is combined as structure elements by condensation or polymerization. Since these produce anthocyanidins such as cyanidin, delphinidin, and pelargonidin with an acid treatment, they are given these names. These contain proanthocyanidin and their stereoisomers, such as procyanidin, prodelphinidin, propelargonidin composed of dimer, trimer, tetramer, and decamer and above polymer of the aforementioned structure elements. Grape seed polyphenol contains 90% or more of proanthocyanidin, and hence has the highest percentage content.

With the present invention, there is no particular limitation on the additive conditions, and proanthocyanidin may be mixed with dry, semi-dry, wet or live bait types beforehand, or are added immediately before feeding.

Furthermore, in the present invention, 30 to 300 ppm of proanthocyanidin is added to the carotenoid mixture feed. If the added amount is less than 30 ppm, the effect is not seen, while if this exceeds 300 ppm, a problem arises in that as with the tannin, there is obstruction to iron absorption due to chelation of iron with this, and a drop in the function of defecation from the digestive organs. Therefore, the added amount of proanthocyanidin is preferably from 50 to 250 ppm, and more preferably from 100 to 200 ppm.

Moreover, in the present invention, by controlling the weight ratio of proanthocyanidin to carotenoid to a specific range, the affect of the present invention can be achieved. This weight ratio, prescribed as carotenoid : proanthocyanidin, is 10 : 300 to 200 ppm : 30ppm, preferably 20 : 250 to 150 ppm : 50 ppm, and more preferably 30 : 200 to 100 ppm : 100 ppm.

So that the cultured fish do not keep away from feeding, due to the astringency of the proanthocyanidin, and in order to prevent wash away, this is preferably added as a formulation made by a process such as masking, covering or micro-encapsulating with a film formation material such as grease, gelatin or dextrin, or tabletizing with dextrin, lactose or the like.

In the present invention, evaluation of the cultured fish was performed by the cortisol content in the blood. Cortisol is an adrenal cortex hormone which displays its strongest affect on the metabolic system, not only metabolizing sugars and electrolyte, but also contributing to metabolic activation of lipid and protein. Moreover, this also activates various hormones and enzymes (also having a synergistic effect on metabolism improvement), increases immune strength, and contributes to so called health maintenance. How this is related to cultivating fish and the like, is disclosed in the literature (refer for example to Iwanami Biological Dictionary (4th edition), page 486, published by Iwanami Shoten, March 8, 2000, Yasugi Ryuichi, et al. edited, and Biological Dictionary (3rd edition) pages 547-548, published by Tokyo Chemical Dojin, November 20, 1998, Imabori Kazutomo et al. supervied). Here, in teleost (bony fish) cortisol is the main adrenal cortex hormone, and plays an important role in sea water salinity adaptation.

### Working Examples

Working examples of cultured fish carotenoid added feed of the present invention will now be described.

At first, a test section was set up using the facilities described in Table 1. As the sample cultured fish, trout of an average weight of approximately 1.8 kg, were fed with the feed disclosed in Table 2 every 5 minutes during the day and every 2 hours during the night, so that the feed was effectively ingested. Cultivating trials were carried out with an amount of feed per cultured fish of 40 to 80 g (average fish body weight; 1.8 to 4.8 kg) given for 60 days. For comparison, a control section was similarly set up and the feed disclosed in Table 2 was given to trout under the same conditions as in the test section.

From observation, over a time zone where they could be observed daily for more than two weeks from starting cultivation, the cultured fish of the test section were more alert and energetic than the cultured fish of the control section.

After completion of the cultivating test period, 10 pre-landed cultured fish from each of the cultivating sections namely the test section and the control section were extracted randomly at a time. Furthermore, 10 fish at a time were randomly extracted from post-landed cultured fish from the test section and the control section. Blood was then collected from each of the extracted fish bodies, and the collected blood samples were held for 2 hours on ice and then frozen.

In collecting blood from the pre-landed cultured fish, in order to minimize stress load, the fish was extracted one at a time and hit on the head and the blood was then collected. In collecting blood from the post-landed cultured fish, in order to artificially give a stress load, the cultured fish were drawn up with a cage, and placed live in a dry container, and anaesthetized with carbon dioxide, and the blood was collected 5 minutes later. Measurement of the cortisol in the blood was performed in accordance with the RIA method (Radio Immune Assay) of the Institute of Marine Research of Austevoll, Norway.

The measurement results are shown in Table 3. As seen from Table 3 when the cortisol value for before landing (pre-landed) is compared, for the working example the cortisol value in the cultured fish blood is much higher than for the comparative example. This shows that for the cultured fish of the working example the cortisol secretional capacity is much greater than for the cultured fish of the comparative example, and the carbohydrate metabolism and the electrolyte metabolism are activated. Consequently, the cultured fish are cultivated in good condition with metabolism of the lipid promoted, and due to improvement in movement (swimming) reserve strength, body meat firmness results.

When the cortisol value for after landing (post-landed) is compared, the increase rate with respect to pre-landed is only two times with the working example, but is 3.4 and 4.5 times with the comparative example, that is with the working example, the cortisol increase rate in the cultured fish blood is lower than with the comparative example. In the working example, while severe stress such as painful death is given before collecting blood, the cortisol increase for post-landing, is smaller with the working example than with the comparative example. This shows that the quality and freshness after landing is much superior.

The fact that the quality and freshness after landing is much superior is also apparent from the following account. Landed cultured fish from each of the cultivation sections namely the test section and the control section were extracted randomly at a time. After holding these in ice for 15 days at 25 to 30°C below zero, the cultured fish of each section were equally divided into a deep color group of five fish and a light color group of five fish. Color measurement samples set at 3 cm from the main dorsal fin head side tip root to the belly side of each fish body were collected. The fish body color was measured using a color-difference meter type CR-300 made by Minolta. For the test section, the average lightness was; dark color group 49 and light color group 44. Similarly for the control section, the average lightness was; dark color group 36 and light color group 39. In all cases the test section showed a higher lightness.

In the working example, the good effects for pre-landed and post-landed can be said to be due to the synergistic affect of the carotenoid and proanthocyanidin derived from the feed.

**Table 1**

| | |
|---|---|
| Facilities: Test cage | 15 x 15 x 18m 2 sets |
| Sample fish number | Approximately 18,600 per cage |
| Depth of water | Approximately 80 to 120 m |
| Water temperature | Average 10°C |

**Table 2**

| Cultured fish feed (Note 1) | | |
|---|---|---|
| | Working example (Test section) | Comparative example (Control section) |
| Fish meal (Mackerel, smelt, herring) | 508 | 508 |
| Animal oil and fat | 280 | 208 |
| Soy meal | 100 | 99 |
| Wheat flour | 100 | 100 |
| Mixed vitamin formulation (Note 2) | 10 | 10 |
| Astaxanthin formulation (Note 3) (purity 8%) | 0.9 | 0.9 |
| (the above converted to astaxanthin in ppm | 72 | 72) |
| Proanthocyanidin formulation (Note 4) (purity 16%) | 1 | 0 |
| (the above converted to proanthocyanidin in ppm | 160 | 0) |
| Total | 1000 | 1000 |
| (Note 1) Constituents are crude protein 40%, crude fat 32%, crude fiber below 2%, ash 8% | | |
| (Note 2) Vitamin A 6,000 IU/kg, vitamin D3 3,000 IU/kg, vitamin E 180 mg/kg, vitamin C 100mg/kg. | | |
| (Note 3) Carophyll Pink (trademark) made by Roche Vitamin Japan | | |
| (Note 4) KPA (registered trademark) - F made by Kikkoman | | |

**Table 3**

| Cortisol measurement value (ng/ml) | | | | |
|---|---|---|---|---|
| | Working example (test section) | | Comparative example (control section) | |
| Test number | Prelanded | Postlanded | Prelanded | Postlanded |
| 1 | 33 | 65 | 2 | 22 |
| 2 | 39 | 44 | 7 | 54 |
| 3 | 56 | 98 | 33 | 21 |
| 4 | 36 | 98 | 12 | 28 |
| 5 | 39 | 138 | 2 | 20 |
| 6 | 28 | 57 | 13 | 19 |
| 7 | 58 | 36 | 4 | 38 |
| 8 | 18 | 39 | 5 | 15 |
| 9 | 14 | 49 | 2 | 43 |
| 10 | 30 | 70 | 2 | 19 |
| Total average | 35.1 | 69.3 | 8.2 | 27.9 |
| Average | 34.9 | 64.9 | 5.9 | 26.3 |
| Note: Average is the average value of the remaining value after the minimum value and the maximum value are removed. | | | | |

According to the cultured fish carotenoid added feed of the present invention, excellent cultured fish cultivating of cultured fish is achieved, which cannot be obtained with conventional cultivating techniques. Furthermore, in addition to excellent cultured fish cultivating, the remarkable affect is demonstrated in that good maintenance of freshness after landing can be achieved.

## Claims

1. A cultured fish feed made by adding 30 to 300 ppm of polyphenol to a cultured fish feed mixed with 10 to 200 ppm of carotenoid.

2. A cultured fish feed wherein a weight ratio of an added amount of polyphenol to a carotenoid mixture amount prescribed as carotenoid: polyphenol is 10: 300 to 200 ppm: 30 ppm.

3. A cultured fish feed according to claim 1 wherein said polyphenol is proanthocyanidin.

4. A cultured fish feed according to claim 2 wherein said polyphenol is proanthocyanidin.

5. A cultured fish feed according to claim 3, wherein said carotenoid is astaxanthin.

6. A cultured fish feed according to claim 4 wherein said carotenoid is astaxanthin.

7. A cultured fish feed according to either one of claim 1 or claim 2, wherein said polyphenol is added as a formulation made by a process such as masking, covering, or micro-encapsulating with a film formation material, or tabletizing with dextrin, lactose or the like.

8. A cultured fish feed according to any one of claim 3 through claim 6, wherein proanthocyanidin is added as a formulation made by a process such as masking, covering, or micro-encapsulating with a film formation material, or tabletizing with dextrin, lactose or the like.
